# FASCICULE DE BREVET EUROPEEN

(11) **EP 3 134 766 B1**
(45) Date de publication et mention de la délivrance du brevet: **06.03.2019**
(21) Numéro de dépôt: 15719810.2
(22) Date de dépôt: 10.04.2015
(51) Int. Cl.: G02C 5/14, G02C 5/22

(54) **DISPOSITIF DE CONNEXION DE BRANCHES DE LUNETTE SUR LA FACE FRONTALE**
VORRICHTUNG ZUM VERBINDEN VON BRILLENBÜGELN MIT DER RAHMENFRONT
DEVICE FOR CONNECTING SPECTACLE TEMPLES TO THE FRAME FRONT

(30) Priorité: 25.04.2014 FR 1453754
(43) Date de publication de la demande: 01.03.2017
(73) Titulaire: BAARS ET ASSOCIES, 01100 Oyonnax (FR)
(72) Inventeur: RUBAUD, Marc-Antoine, 73100 Aix Les Bains (FR); THUAU, Guillaume, 92290 Chatenay Malabry (FR)
(74) Mandataire: Gasquet, Denis
(86) Numéro de dépôt international: PCT/FR2015/050964
(87) Numéro de publication internationale: WO 2015/162354

(56) Documents cités:
- WO-A1-2009/113187
- CA-A1- 2 321 318
- JP-U- S5 610 612
- US-A1- 2007 132 942
- US-A1- 2009 195 747

## Description

La présente invention concerne un perfectionnement pour lunettes et plus particulièrement un perfectionnement concernant la connexion des branches.

On connait déjà de nombreux dispositifs de connexion de branches à la partie frontale de la lunette. Beaucoup de dispositifs sont de simples systèmes d'articulation, mais les phénomènes de mode étant, les constructeurs ont imaginé des dispositifs de connexion permettant de monter différents types de branches sur la partie frontale de la lunette. Ainsi les constructeurs ont développé des dispositifs de connexion amovible de banches, comme par exemple celui décrit dans la demande de brevet FR 1 351 894. La connexion se faisant par clipsage avec un système élastique, ce qui rend aléatoire la retenue de la branche.

On connait aussi des connexions par articulation comme par exemple celle décrite par la demande de brevet FR 2 956 751, la retenue des branches une fois en position de mise en place sur le visage est certes assurée, mais il n'est pas possible pour l'utilisateur de procéder au changement des branches en fonction de ses désirs. De plus, les lunettes décrites qui comprennent deux aimants sont beaucoup trop lourdes pour être confortables à porter. Des lunettes avec une connexion des branches sur la face frontale réalisée par un aimant sont décrites dans les documents CA 2321318 A1 et JP S56 10612 U.

La présente invention propose des lunettes telles que définies dans la revendication 1 et entend résoudre le problème évoqué précédemment, en apportant un perfectionnement à ce type de dispositif.

Ainsi, les lunettes de l'invention, comprenant une face frontale à laquelle sont fixées les branches, sont caractérisées en ce que la connexion des branches sur la face frontale est amovible, et est réalisée par un aimant.

Selon une caractéristique complémentaire, l'aimant solidaire de la face frontale coopère avec un boîtier solidaire des branches, ledit boîtier étant constitué par un ensemble de parois métalliques pour former un logement d'emboîtement.

Selon un mode de réalisation préféré, le boîtier réalisé par un ensemble de parois métalliques est constitué par une paroi latérale, une paroi supérieure une paroi inférieure ainsi qu'une paroi de fond, pour former le logement d'emboîtement, tandis que sa forme et ses dimensions, correspondent à la forme et aux dimensions de la partie de connexion de l'aimant.

Selon une autre caractéristique, la face frontale comprend des pièces latérales de connexion destinées à coopérer avec les extrémités de connexion des branches.

On a compris que contrairement aux lunettes connues, les branches des lunettes de l'invention ne sont pas montées articulées sur la face frontale et notamment sur la monture autour d'un axe vertical, ce qui permet à l'utilisateur la désolidarisation des branches sans avoir recours à un outil.

On a aussi compris que la retenue de chacune des branches se faisait grâce à un seul aimant, solidaire de la monture ou des branches coopérant avec une pièce métallique solidaire respectivement des branches ou de la monture.

Ajoutons que la simplicité du système le rend très fiable et durable, avec aucun risque de casse, ce qui n'est pas le cas des charnières articulées de branches.

L'invention concerne aussi la monture seule, et /ou les branches seules

D'autres caractéristiques et avantages de l'invention se dégageront de la description qui va suivre en regard des dessins annexés qui ne sont donnés qu'à titre d'exemples non limitatifs.

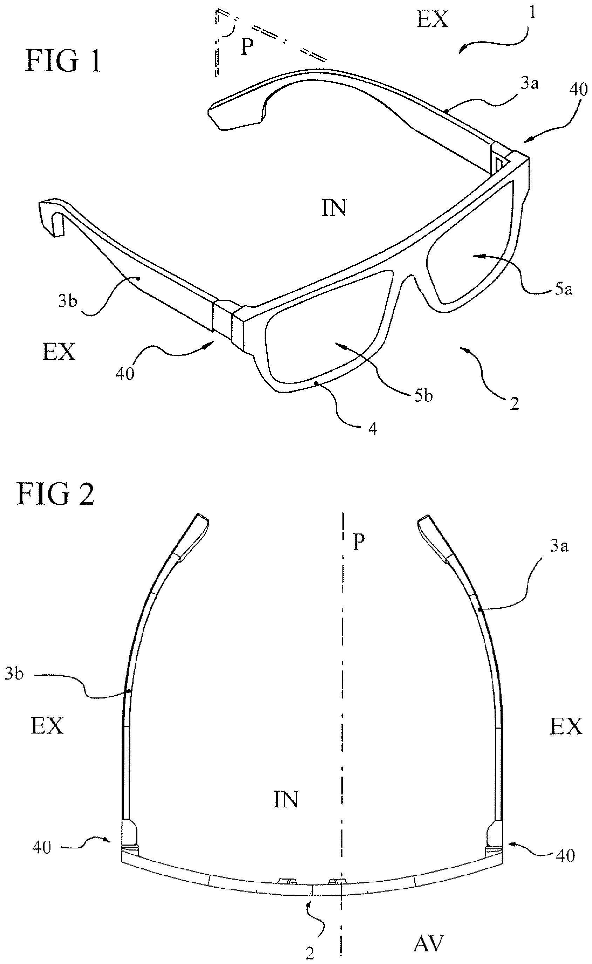

La figure 1 est une vue en perspective des lunettes selon l'invention.
La figure 2 est une vue de dessus.

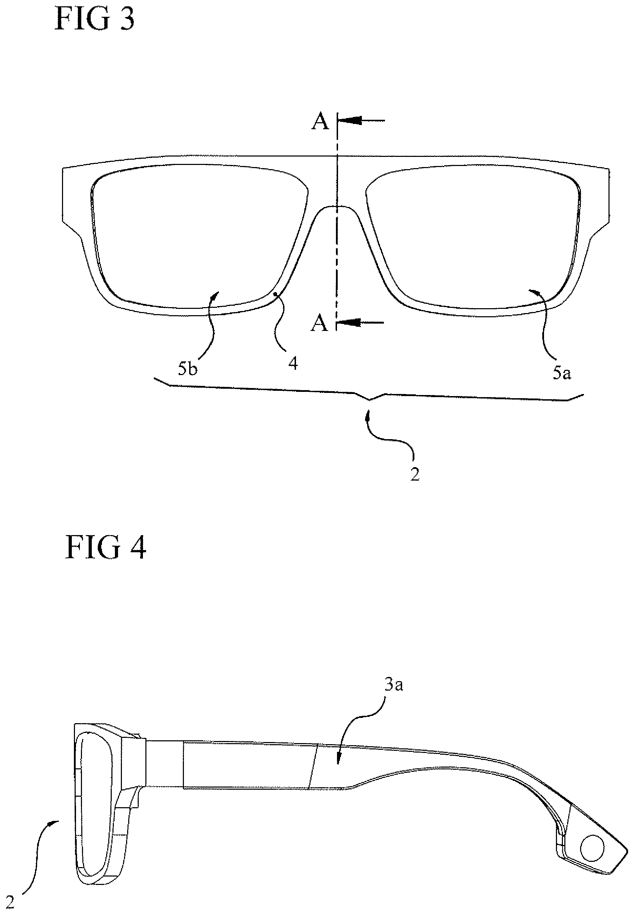

La figure 3 est une vue de face.
La figure 4 est une vue latérale.

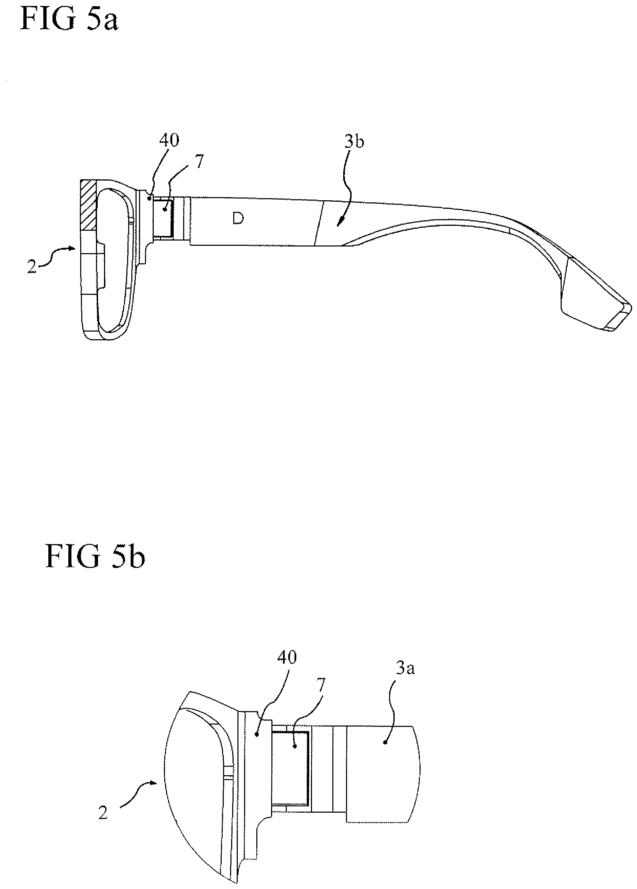

La figure 5a est une vue en coupe selon A-A, tandis que la figure 5b illustre en détail la connexion de la branche.

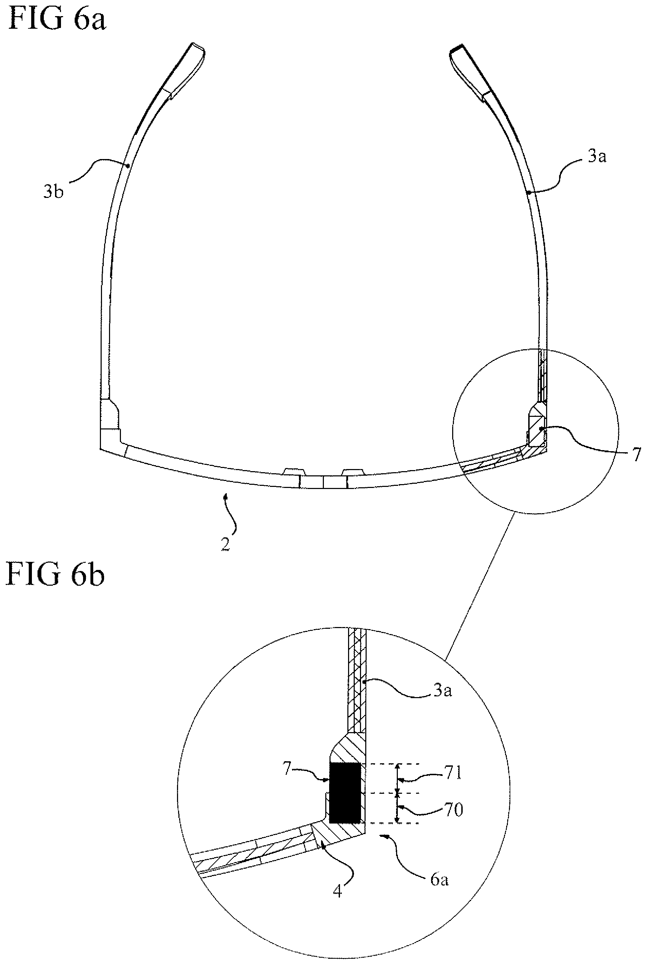

La figure 6a est une vue de dessus avec une coupe partielle illustrée à la figure 6b.
La figure 7 est une vue en perspective illustrant comment se fait la connexion de la branche sur la face frontale, avant que soit réaliser ladite connexion.
La figure 8 est une vue en perspective de détails à plus grande échelle, de la figure 7.
La figure 9 est une vue similaire à la figure 8 illustrant un autre mode de réalisation non couvert par les revendications.

Les lunettes de l'invention désignées sur les figures par la référence globale (1) ayant un plan de symétrie générale (P) sont constituées de façon connue, par une face frontale (2) et deux banches (3a, 3b).

La face frontale peut être du type comme par exemple, avec une monture, et deux verres optiques ou solaires, ou sans monture mais juste avec des pièces de connexion latérale pour fixer les branches.

L'invention illustrée sera fait avec une monture. Ainsi, la face frontale (2) est constituée par une monture (4) retenant deux façades optiques (5a, 5b) soit de correction, soit solaires, soit les deux.

Les branches (3a, 3b) qui sont destinées à assurer le maintien des lunettes sur le visage du porteur, sont connectées aux extrémités latérales (40) de la face frontale (2), soit à la monture (4) soit directement aux verres (5a, 5b) dans le cas de lunettes sans monture, et ce par l'intermédiaire de pièces latérales de connexion (6a, 6b).

Selon l'invention la connexion des branches (3a, 3b) est amovible pour laisser au porteur l'initiative du choix de ses branches. On entendra par connexion amovible, une connexion qui permet de démonter les branches sans outillage, en opposition aux fixations de branches par une articulation mécanique autour d'un axe vertical, comme cela est le cas dans la plupart des cas.

Selon une autre caractéristique, la retenue de chacune des branches sur les pièces latérales de connexion (6a, 6b) se fait grâce à au moins un seul aimant (7) par côté.

Selon le mode préféré de l'invention, les aimants (7) sont solidaires des parties latérales de connexions (6a, 6b).

Ainsi les aimants (7) qui sont avantageusement de forme parallélépipédiques, ont une première partie (70) retenue dans la partie de connexion correspondante (6a, 6b) pour faire saillie vers l'extérieur du côté où s'étendent les branches, par une deuxième partie (71), ou partie de connexion. Ladite deuxième partie (71) est destinée à coopérer avec l'extrémité de la branche correspondante pour en assurer la connexion amovible.

A cet effet l'extrémité de connexion (8) de chacune des branches (3a, 3b) comprend un logement d'emboîtement métallique (9) destiné à recevoir la partie en saillie de l'aimant (71). Ledit logement d'emboîtement (9) est réalisé par une pièce métallique (10) solidaire de l'extrémité de connexion de chacune des branches.

La pièce métallique (10) est constituée d'un ensemble de parois métalliques formant un boîtier de retenue (10). Ainsi le boîtier est constitué d'une paroi latérale (10a) d'une paroi supérieure (10b), et d'une paroi inférieure (10c) ainsi qu'une paroi de fond (10d), pour former le logement d'emboîtement (9). Ce dernier étant ouvert du coté interne (IN) et vers l'avant (AV). Ce qui permet à l'utilisateur une facilité de mise en place et de retrait des branches.

Précisons que la forme et les dimensions du logement d'emboitement (9), correspondent à la forme et aux dimensions de la deuxième partie en saillie (71) de l'aimant (7). Notons que la paroi latérale (10a) est disposée coté extérieur (EX) de l'extrémité (8) de la branche.

Précisons que l'ensemble des parois par coopération avec l'aimant (7) empêche le mouvement de déplacement de la branche, et ce type d'accouplement offre une rigidité de retenue maximum afin que les branches restent en place, tout en pouvant être démontées facilement.

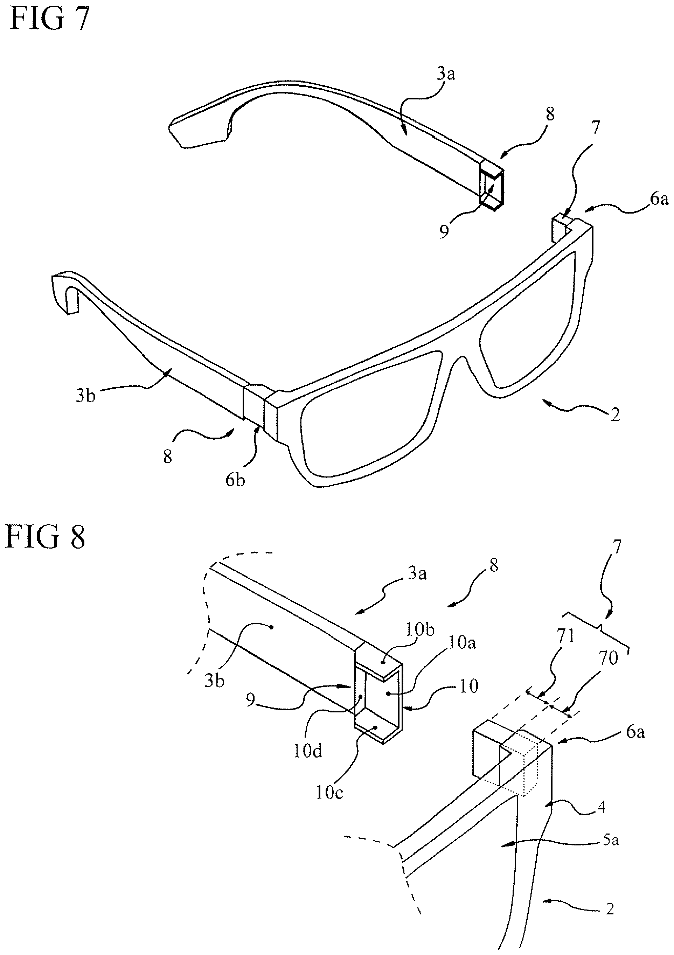

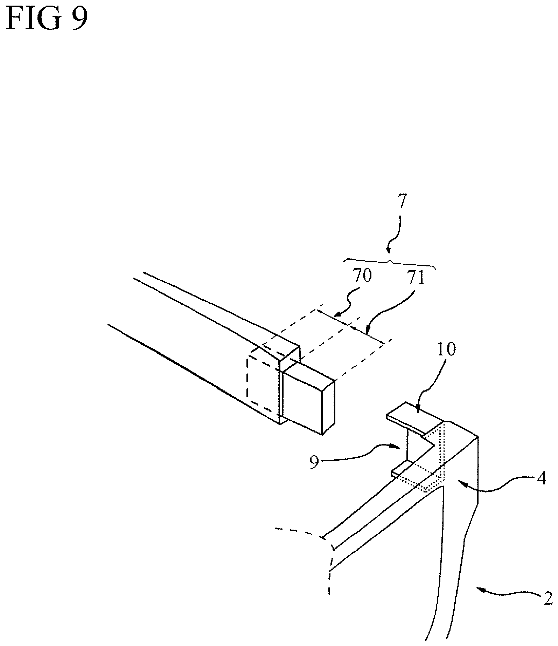

La figure 9 est une vue en perspective similaire à la figure 8, illustrant un autre mode de réalisation non couvert par les revendications. Selon cet autre mode de réalisation, ce sont les extrémités de connexion (8) des branches (3a, 3b) qui comprennent l'aimant (7) tandis que la face frontale (2) comprend le logement d'emboîtement métallique (9) correspondant. Comme dans le mode de réalisation précédemment décrit l'aimant (7) qui est solidaire de l'extrémité de chacune des branches (3a, 3b) comprend une partie en saillie (71) destinée à être engagée dans le logement d'emboîtement (9) pour y être retenue grâce à l'action de l'aimant.

Ledit logement métallique (9) destiné à recevoir la partie en saillie (71) de l'aimant (7) comprend un ensemble de parois métalliques, à savoir est constitué d'une paroi latérale (10a) d'une paroi supérieure (10b, et d'une paroi inférieure (10c) ainsi qu'une paroi de fond (10d), pour former le logement d'emboîtement (9). Précisons que comme précédemment, la forme et les dimensions du logement d'emboitement (9), correspondent à la forme et aux dimensions de la deuxième partie en saillie (71) de l'aimant (7). Notons que selon ce mode de réalisation, la paroi latérale (10a) est disposée coté intérieur (IN) de la face frontale.

On a compris que selon les deux modes de réalisation décrits et illustrés, la deuxième partie en saillie (71) de l'aimant (7) constitue la partie de connexion de l'aimant (7).

## Revendications

1. Lunettes (1) comprenant une face frontale (2) à laquelle sont fixées les branches (3a, 3b), la connexion des branches sur la face frontale est amovible, et est réalisée par un aimant (7), **caractérisées en ce que** l'aimant (7) est solidaire de la face frontale (2), et coopère avec un boitier (10) solidaire des extrémités (8) des branches (3a, 3b), ledit boîtier étant constitué par un ensemble de parois métalliques (10a, 10b, 10c, 10d) pour former un logement d'emboîtement (9), le boîtier (10) est constitué par une paroi latérale (10a) disposée côté extérieur (EX) de l'extrémité (8) de la branche une paroi supérieure (10b), une paroi inférieure (10c) ainsi qu'une paroi de fond (10d), tandis que la face frontale (2) comprend deux pièces latérales de connexion (6a, 6b), les aimants (7) étant de forme parallélépipédiques, les aimants (7) étant enchâssés dans les parties latérales de connexion (6a, 6b), les aimants (7) ont une première partie (70) retenue sur toute sa périphérie dans la partie de connexion correspondante (6a, 6b) pour faire saillie vers l'extérieur du côté où s'étendent les branches, par une deuxième partie (71) destinée à coopérer avec ledit boîtier solidaire de l'extrémité de la branche correspondante pour en assurer la connexion amovible.

2. Lunettes (1) selon la revendication précédente, **caractérisées en ce que** la forme et les dimensions du logement d'emboîtement (9), correspondent à la forme et aux dimensions de la partie de connexion (71) de l'aimant (7).

3. Lunettes (1) selon la revendication précédente, **caractérisée en ce que** la face frontale (2) comprend des pièces latérales de connexion (6a, 6b) destinées à coopérer avec les extrémités de connexion (8) des branches (3a, 3b).

## Patentansprüche

1. Brille (1) mit einer Rahmenfront (2), an der die Bügel (3a, 3b) befestigt sind, wobei die Verbindung der Bügel an der Rahmenfront abnehmbar ist und von einem Magneten (7) durchgeführt wird, **dadurch gekennzeichnet, dass** der Magnet (7) an der Rahmenfront (2) befestigt ist und mit einem Gehäuse (10) zusammenwirkt, das an den Enden (8) der Bügel (3a, 3b) befestigt ist, wobei das Gehäuse aus einem Satz von Metallwänden (10a, 10b, 10c, 10d) besteht, um ein Einsatzaufnahme (9) zu bilden, wobei das Gehäuse (10) aus einer Seitenwand (10a) besteht, die an der Außenseite (EX) des Endes (8) des Bügels angeordnet ist, einer oberen Wand (10b), einer unteren Wand (10c) und eine Rückwand (10d), während die Rahmenfront (2) zwei seitliche Verbindungsteile (6a, 6b) umfasst, wobei die Magnete (7) quaderförmig sind, die Magnete (7) in die seitlichen Verbindungsteile (6a, 6b) eingebettet sind, wobei die Magnete (7) einen ersten Abschnitt (70) aufweisen, der über seinen gesamten Umfang in dem entsprechenden Verbindungsteil (6a, 6b) gehalten ist, um von der Seite, auf der sich die Bügel erstrecken, durch einen zweiten Abschnitt (71), der dazu bestimmt ist, mit dem Gehäuse zusammenzuwirken, das mit dem Ende des entsprechenden Zweiges integral ist, nach außen vorzustehen, um die lösbare Verbindung sicherzustellen.

2. Brille (1) nach dem vorherigen Anspruch, **dadurch gekennzeichnet, dass** die Form und die Abmessungen der Einsatzaufnahme (9) der Form und den Abmessungen des Verbindungsteils (71) des Magneten (7) entsprechen.

3. Brille (1) nach dem vorherigen Anspruch, **dadurch gekennzeichnet, dass** diese Rahmenfront (2) Verbindungsseitenteile (6a, 6b) umfasst, die dazu bestimmt sind, mit den Verbindungsenden (8) der Bügel (3a, 3b) zusammenzuwirken.

## Claims

1. Spectacles (1) including a front face (2), to which the arms (3a, 3b) are fixed, the connection of the arms to the front face is detachable and is realised by a magnet (7), **characterised in that** the magnet (7) is integral with the front face (2) and cooperates with a housing (10) which is integral with the ends (8) of the arms (3a, 3b), said housing being constituted by a set of metallic walls (10a, 10b, 10c, 10d) in order to form a fitting compartment (9), the housing (10) is constituted by a lateral wall (10a), arranged on the outside (EX) of the end (8) of the arm, an upper wall (10b), a lower wall (10c) as well as a bottom wall (10d), whereas the front face (2) includes two lateral connecting pieces (6a, 6b), the magnets (7) being of parallelipipedal shape, the magnets (7) being mounted in the lateral connecting parts (6a, 6b), the magnets (7) have a first part (70) retained over its entire periphery in the corresponding connecting part (6a, 6b), in order to project towards the outside of the side where the arms extend, by a second part (71) intended to cooperate with said housing which is integral with the end of the corresponding arm, in order to ensure the detachable connection thereof.

2. Spectacles (1) according to the preceding claim, **characterised in that** the shape and the dimensions of the fitting compartment (9) correspond to the shape and to the dimensions of the connecting part (71) of the magnet (7).

3. Spectacles (1) according to the preceding claim, **characterised in that** the front face (2) includes lateral connecting pieces (6a, 6b) intended to cooperate with the connecting ends (8) of the arms (3a, 3b).
